# EUROPÄISCHE PATENTANMELDUNG

(11) **EP 2 910 792 A1**
(43) Veröffentlichungstag der Anmeldung: **26.08.2015**
(21) Anmeldenummer: 15153459.1
(22) Anmeldetag: 02.02.2015
(51) Int. Cl.: F04D 25/02, F04D 29/42, F04D 29/60, F16L 21/08, F16L 37/107, F16L 37/248

(54) **VERBINDUNGSEINRICHTUNG FÜR DIE FLUIDISCHE VERBINDUNG EINES FLUIDROHRABSCHNITTS MIT EINEM WEITEREN FLUIDROHRABSCHNITT**

(30) Priorität: 20.02.2014 DE 102014002240
(71) Anmelder: MANN + HUMMEL GMBH, 71638 Ludwigsburg (DE)
(72) Erfinder: Skorpíková, Petra, 67176 Nasimerice (CZ); Kopriva, Martin, 66462 Hrusovany u Brna (CZ)

(57) **Zusammenfassung**

Die Erfindung betrifft eine Verbindungseinrichtung (10) zur fluidisch dichten Verbindung zweier Rohrendabschnitte (12, 13). Die Verbindungseinrichtung (10) weist ein Halteelement auf, das durch einen Bajonettverschluss an einem ersten Rohrendabschnitt (12) montierbar ist. Das Halteelement weist eine Lasche (46) auf, die mittels einer Schraube (58) der Verbindungseinrichtung (10) an einem zweiten Rohrendabschnitt (13) befestigbar ist. Die Verbindungseinrichtung (10) ist dadurch konstruktiv besonders einfach ausgebildet, schafft eine dichte Verbindung und kann auch bei beengten Verhältnissen auf einfache Weise montiert werden.

## Beschreibung

### Technisches Gebiet

Die Erfindung betrifft eine Verbindungseinrichtung für die fluidische Verbindung eines Fluidrohrabschnitts mit einem weiteren Fluidrohrabschnitt, insbesondere eines Turboladers mit einem Ladeluftrohr.

### Stand der Technik

Aus dem Stand der Technik ist es bekannt, einen Turbolader über ein Ladeluftrohr fluidisch mit einer weiteren Vorrichtung, beispielsweise einem Resonator, zu verbinden. Ein solches Ladeluftrohr wird auch als Ladeluftschlauch bezeichnet.

US 2012/0298063 A1 offenbart eine Verbindungseinrichtung zum Anschluss eines Ladeluftrohrs an einen Turbolader. Die Verbindungseinrichtung weist dabei einen Bajonettverschluss auf.

Aus der US 2007/0216161 A1 ist weiterhin eine Verbindungseinrichtung zum Anschluss eines Ladeluftrohres an einen Turbolader bekannt geworden, die einen Dichtring aufweist.

Schließlich werden am Markt Verbindungseinrichtungen in Form von "Schraublösungen" eingesetzt, die eine Lasche aufweisen, wobei die Lasche zwei Rohrendabschnitte verbindet und durch jeweils eine Schraube an einem Rohrendabschnitt befestigt ist.

Die bekannten Verbindungseinrichtungen müssen entweder aufwändig und teuer produziert werden oder sind nicht zuletzt aufgrund der beengten Einbauverhältnisse im Motorraum eines Kraftfahrzeugs nur auf umständliche Art und Weise montierbar. Die Kosten zur Herstellung einer solchen Verbindungseinrichtung sind dabei vor allem deshalb kritisch, weil es sich bei den in Rede stehenden Verbindungseinrichtungen um Massenprodukte handelt.

### Offenbarung der Erfindung

Der Erfindung liegt die Aufgabe zugrunde, eine Verbindungseinrichtung für die fluidische Verbindung eines Fluidrohrabschnitts mit einem weiteren Fluidrohrabschnitt, insbesondere eines Turboladers mit einem Ladeluftrohr, bereitzustellen, die sowohl kostengünstig produzierbar als auch einfach und bequem montierbar ist.

Diese Aufgabe wird durch eine Verbindungseinrichtung mit den Merkmalen des Anspruchs 1 gelöst. Die Unteransprüche geben zweckmäßige Weiterbildungen an.

Die erfindungsgemäße Verbindungseinrichtung für die fluidische Verbindung eines Fluidrohrabschnitts mit einem weiteren Fluidrohrabschnitt, insbesondere für die Verbindung eines Turboladers mit einem Ladeluftrohr, umfasst einen ersten Rohrendabschnitt und einen zweiten Rohrendabschnitt, wobei an dem ersten Rohrendabschnitt ein Halteelement der Verbindungseinrichtung angeordnet ist, das zumindest begrenzt um die Längsachse des ersten Rohrendabschnitts drehbar ist, wobei das Halteelement und der erste Rohrendabschnitt mehrere Vorsprünge aufweisen, die einen Bajonettverschluss zwischen dem ersten Rohrendabschnitt und dem Halteelement bilden, wobei das Halteelement eine Lasche mit einer Durchgangsausnehmung aufweist, in der eine Schraube des Halteelements geführt ist und wobei das zweite Rohrelement eine Ausnehmung aufweist, in die die Schraube eindrehbar ist.

Die Verbindungseinrichtung weist somit zwei miteinander verbindbare Rohrendabschnitte auf. Ein erster Rohrendabschnitt weist ein Halteelement auf, das zumindest begrenzt um die Längsachse des ersten Rohrendabschnitts drehbar ist. Das Halteelement weist eine Lasche auf, die mit einer Durchgangsausnehmung versehen ist. In der Durchgangsausnehmung ist eine Schraube geführt. Die Schraube erstreckt sich mithin durch die Durchgangsausnehmung der Lasche des Halteelements hindurch und ist in eine Ausnehmung des zweiten Rohrendabschnitts eindrehbar, d.h. einschraubbar. Die Ausnehmung des zweiten Rohrendabschnitts kann dazu mit einem Innengewinde versehen sein, das zu einem Außengewinde der Schraube korrespondiert. Zwischen dem Halteelement und dem ersten Rohrendabschnitt ist mittels mehrerer Vorsprünge ein Bajonettverschluss ausgebildet. Der Bajonettverschluss begrenzt zumindest die Bewegungsmöglichkeit des Halteelements in Richtung des Rohrendes des ersten Rohrendabschnitts in verbundenem Zustand der Verbindungseinrichtung. Die Verbindung der beiden Rohrendabschnitte erfolgt somit von dem ersten Rohrendabschnitt über den Bajonettverschluss zum Halteelement mit der Lasche und weiter zur Schraube, die in den zweiten Rohrendabschnitt eingedreht wird.

Die Verbindungseinrichtung weist einen einfachen konstruktiven Aufbau auf und ist dadurch kostengünstig produzierbar. Weiterhin ist sie in einem beengten Motorraum auf einfache Weise montierbar. Das Halteelement muss lediglich auf den ersten Rohrendabschnitt aufgesteckt und nachfolgend relativ zum ersten Rohrendabschnitt um dessen Längsachse verdreht werden, um so den Bajonettverschluss in seine Verriegelungsstellung zu überführen und dadurch das Halteelement zugfest mit dem ersten Rohrendabschnitt zu verkoppeln. Zum Schließen des Bajonettverschlusses muss daher nicht der gesamte Rohrendabschnitt gedreht werden. Die endgültige Befestigung der Verbindungseinrichtung erfolgt durch das Einschrauben der einzelnen Schraube in die Ausnehmung des zweiten Rohrendabschnitts. Dadurch sind die beiden Rohrendabschnitte zugfest und drehfest miteinander verbunden. Gegenüber bekannten "Schraublösungen" wird somit eine Schraube eingespart und die Montage insgesamt vereinfacht.

Die Verbindung ist besonders stabil ausgebildet, wenn die Vorsprünge des Halteelements, die einen Teil des Bajonettverschlusses darstellen, einteilig, d.h. einstückig, mit den weiteren Bestandteilen des Halteelements ausgebildet sind. Alternativ oder zusätzlich dazu sind zur stabilen Ausbildung der Verbindung die Vorsprünge des ersten Rohrendabschnitts bevorzugt einteilig mit den weiteren Bestandteilen des Rohrendabschnitts ausgebildet.

Die Rohrendabschnitte sind vorzugsweise ineinander einschiebbar. Beispielsweise kann der erste Rohrendabschnitt in den zweiten Rohrendabschnitt einführbar sein. Alternativ dazu kann der zweite Rohrendabschnitt in den ersten Rohrendabschnitt einführbar sein. Hierdurch kann eine fluidisch besonders dichte Verbindung erzielt werden.

Um die Handhabung der Verbindungseinrichtung für einen Monteur nochmals weiter zu vereinfachen, kann der erste Rohrendabschnitt zumindest einen Anschlag aufweisen, der die Drehung des Halteelements um den ersten Rohrendabschnitt begrenzt. Hierdurch muss der Monteur das Halteelement lediglich "bis zum Anschlag" drehen, um den korrekten Verschluss des Bajonettverschlusses sicherzustellen.

Die Lasche kann erfindungsgemäß einen Führungsabschnitt zum Auffinden der korrekten Montageposition der Lasche am zweiten Rohrendabschnitt aufweisen. Der Führungsabschnitt kann dabei als ein abgewinkelter Randabschnitt der Lasche ausgebildet sein, der mit einer Führungsfläche des zweiten Rohrendabschnitts zusammenwirkt.

Das Halteelement kann einen Befestigungsabschnitt zur Lagerung des Halteelements an dem ersten Rohrendabschnitt aufweisen, der mehr als die Hälfte des Umfangs des ersten Rohrendabschnitts umfasst. Das Halteelement kann dadurch in Form einer auf den ersten Rohrendabschnitt aufpressbaren Klammer ausgebildet sein.

Um eine besonders feste Verbindung zu erzielen, ist der Befestigungsabschnitt vorzugsweise im Wesentlichen ringförmig ausgebildet, wobei der Befestigungsabschnitt den Umfang des ersten Rohrendabschnitts vollständig umfasst.

Die Lasche stellt ein besonders stark beanspruchtes Teil der erfindungsgemäßen Verbindungseinrichtung dar. Eine gleichzeitig feste und kostengünstige Ausbildung der Verbindungseinrichtung wird dadurch ermöglicht, dass die Lasche aus Blech ausgebildet ist.

Die Stabilität der Verbindungseinrichtung ist besonders hoch, wenn die Lasche einteilig mit dem Befestigungsabschnitt ausgebildet ist. Das Halteelement kann insbesondere aus Metall oder aus einem Faserverbundwerkstoff bestehen.

Zwischen dem ersten Rohrendabschnitt und dem zweiten Rohrendabschnitt kann ein elastisches Dichtungselement angeordnet oder ausgebildet sein, um eine besonders luftdichte Verbindung der Rohrendabschnitte zu erzielen. Das elastische Dichtungselement kann insbesondere ein Radialdichtungselement sein.

Das elastische Dichtungselement kann einteilig mit einem Teil der Verbindungseinrichtung ausgebildet sein. Das Dichtungselement kann demgegenüber auch in Form eines Dichtringes ausgebildet sein, so dass ein kostengünstig erwerbbares, standardisiertes Dichtungselement eingesetzt wird.

In einer Ausführung der erfindungsgemäßen Verbindungseinrichtung für die fluidische Verbindung eines Turboladers mit einem Ladeluftrohr kann der erste Rohrendabschnitt ein Rohrendabschnitt des Turboladers und der zweite Rohrendabschnitt ein Rohrendabschnitt des Ladeluftrohrs sein. Der erste Rohrendabschnitt kann dabei einteilig mit einem Turboladergehäuse ausgebildet sein.

Alternativ dazu kann in der Ausführung der erfindungsgemäßen Verbindungseinrichtung für die fluidische Verbindung eines Turboladers mit einem Ladeluftrohr der erste Rohrendabschnitt ein Rohrendabschnitt des Ladeluftrohrs und der zweite Rohrendabschnitt ein Rohrendabschnitt des Turboladers sein. Der zweite Rohrendabschnitt kann dabei einteilig mit einem Turboladergehäuse ausgebildet sein.

Die erfindungsgemäße Verbindungseinrichtung kann zur Verbindung von Rohren zur Leitung von Luft eingesetzt werden. Die Verbindungseinrichtung kann weiterhin zur Verbindung von Rohren zur Leitung anderer Medien ausgebildet sein.

### Kurze Beschreibung der Zeichnungen

Weitere Merkmale und Vorteile der Erfindung ergeben sich aus der nachfolgenden detaillierten Beschreibung eines Ausführungsbeispiels der Erfindung, anhand der Figuren, der Zeichnung, die erfindungswesentliche Einzelheiten zeigt sowie aus den Ansprüchen.

Die in der Zeichnung gezeigten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Die Zeichnung stellt die Montage einer erfindungsgemäßen Verbindungseinrichtung in Einzelschritten (Fig. 2-5) sowie die fertig montierte Verbindungseinrichtung (Fig. 1) dar. Im Einzelnen zeigen:
- Fig. 1: eine perspektivische Ansicht einer Verbindungseinrichtung in verbundenem Zustand;
- Fig. 2: eine perspektivische Ansicht eines ersten Rohrendabschnitts der Verbindungseinrichtung beim Überstreifen eines Halteelements;
- Fig. 3: eine perspektivische Ansicht des ersten Rohrendabschnittes mit aufgezogenem Halteelement;
- Fig. 4: eine perspektivische Ansicht der Verbindungseinrichtung beim Aufschieben eines zweiten Rohrendabschnitts auf den ersten Rohrendabschnitt; und
- Fig. 5: eine perspektivische Ansicht der Verbindungseinrichtung beim Montieren einer Schraube zur Befestigung einer Lasche der Verbindungseinrichtung an dem zweiten Rohrendabschnitt.

### Ausführungsformen der Erfindung

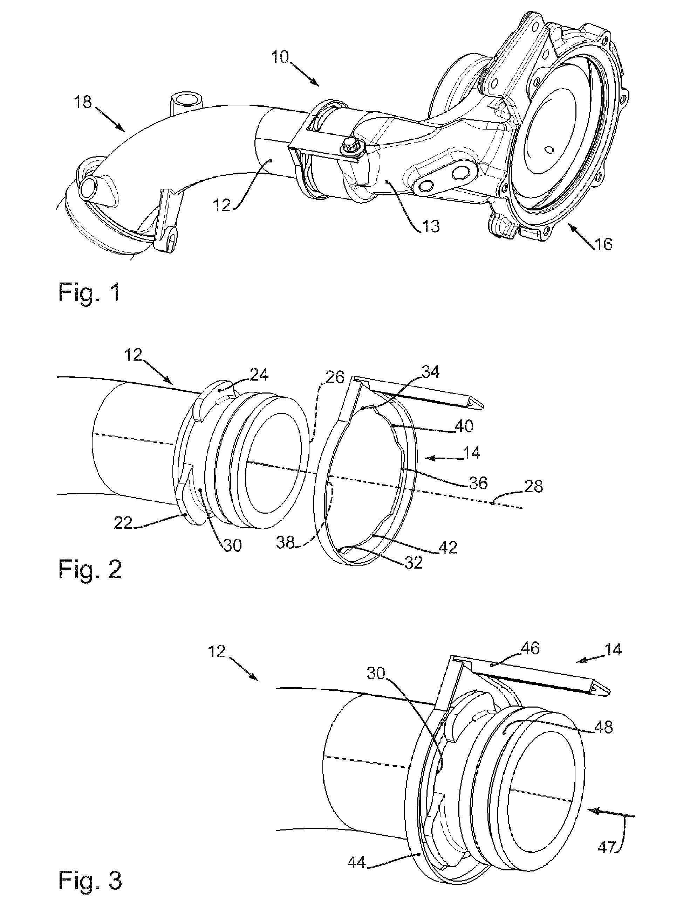

Fig. 1 zeigt eine erfindungsgemäße Verbindungseinrichtung 10 in verbundenem Zustand am Beispiel einer Verbindungseinrichtung eines eines Turboladers mit einem Ladeluftrohr. Die Verbindungseinrichtung 10 verbindet einen ersten Rohrendabschnitt 12 mit einem zweiten Rohrendabschnitt 13. Der zweite Rohrendabschnitt 13 ist Teil eines Turboladers 16. Der erste Rohrendabschnitt ist Teil eines Ladeluftrohrs 18. Das Ladeluftrohr 18 kann den Turbolader 16 mit einem Resonator, einem Dämpfer oder dgl. Verbinden.

Fig. 2 zeigt den ersten Rohrendabschnitt 12 mit einem auf den ersten Rohrendabschnitt 12 aufschiebbaren Halteelement 14. Der erste Rohrendabschnitt 12 weist drei Vorsprünge 22, 24, 26 auf. Aufgrund der perspektivischen Darstellung ist der Vorsprung 26 in Fig. 2 nicht sichtbar und deshalb mit einer gestrichelten Bezugslinie versehen. Die Vorsprünge 22, 24, 26 sind äquidistant zu der Längsachse 28 des ersten Rohrendabschnitts 12 ausgebildet. Weiterhin sind die Vorsprünge 22, 24, 26 äquidistant am Umfang 30 des ersten Rohrendabschnitts 12 ausgebildet. Die Vorsprünge 22, 24, 26 des ersten Rohrendabschnitts 12 sind im Wesentlichen rechteckförmig ausgebildet.

Beim Aufschieben des Halteelements 14 sind die Vorsprünge 22, 24, 26 des ersten Rohrendabschnitts 12 durch passende Ausnehmungen 32, 34, 36 führbar. Genauer gesagt ist der Vorsprung 22 durch die Ausnehmung 32, der Vorsprung 24 durch die Ausnehmung 34 und der Vorsprung 26 durch die Ausnehmung 36 führbar bzw. hindurchschiebbar.

Das Halteelement 14 weist drei Vorsprünge 38, 40, 42 auf, die in verbundenem Zustand der Verbindungseinrichtung 10 (siehe Fig. 1) die Vorsprünge 22, 24, 26 des Halteelements 12 hintergreifen. Aufgrund der perspektivischen Darstellung des Halteelements 14 ist der Vorsprung 40 in Fig. 2 nicht sichtbar und deshalb mit einer gestrichelten Bezugslinie versehen. In geschlossenem Zustand der Verbindungseinrichtung 10 hintergreift der Vorsprung 38 den Vorsprung 22, der Vorsprung 40 den Vorsprung 24 und der Vorsprung 42 den Vorsprung 26. Die Vorsprünge 22, 24, 26, 38, 40, 42 bilden daher einen Bajonettverschluss aus. Um eine besonders hohe Festigkeit der Verbindung zu erzielen, sind die Vorsprünge 22, 24, 26 einteilig mit dem ersten Rohrendabschnitt 12 und die Vorsprünge 38, 40, 42 einteilig mit dem Halteelement 14 ausgebildet.

Fig. 3 zeigt den ersten Endrohrabschnitt 12 mit darauf aufgeschobenem Halteelement 14. Aus Fig. 3 wird ersichtlich, dass das Halteelement 14 einen im Wesentlichen ringförmigen Befestigungsabschnitt 44 aufweist, der den Umfang 30 des ersten Rohrendabschnittes 12 vollständig umgreift. Alternativ dazu kann der Befestigungsabschnitt 44 auch im Wesentlichen klammerförmig ausgebildet sein und den Umfang 30 nur zu mehr als dessen Hälfte umfassen. Im letztgenannten Fall kann der Befestigungsabschnitt 44 auf den Umfang 30 des ersten Rohrendabschnitts 12 aufgeklipst werden. Der Befestigungsabschnitt 44 ist aus Blech ausgebildet. Der Befestigungsabschnitt 44 ist einteilig mit einer Lasche 46 des Halteelements 14 ausgebildet. Das Aufschieben des Halteelements 14 auf den ersten Rohrendabschnitt 12 wird in Fig. 3 durch einen Pfeil 47 angedeutet.

Um eine besonders dichte Verbindung auszubilden, weist der erste Rohrendabschnitt 12 ein elastisches Dichtungselement 48 auf, das aus Gründen der Übersichtlichkeit in den folgenden Figuren nicht dargestellt ist.

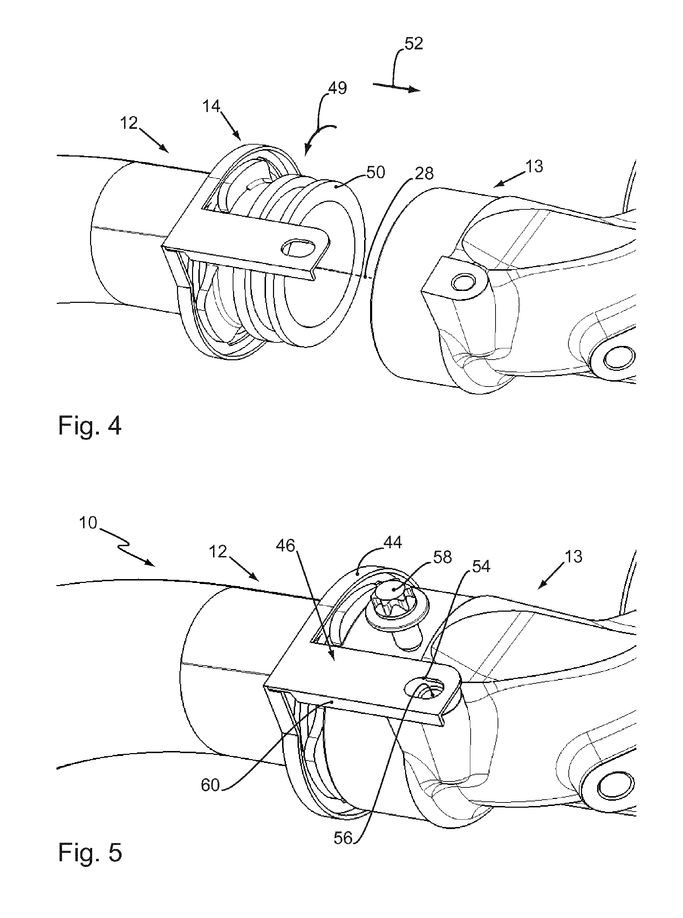

Fig. 4 zeigt den zweiten Endrohrabschnitt 13 und den ersten Endrohrabschnitt 12 mit daran angeordnetem Halteelement 14. Aus einem Vergleich von Fig. 4 mit Fig. 3 wird ersichtlich, dass das Halteelement 14 um die Längsachse 28 des ersten Rohrendabschnitts 12 verdreht wurde. Das Halteelement 14 wurde dabei in Richtung eines Pfeils 49 gedreht. Hierdurch werden die Vorsprünge 22, 24, 26 von den Vorsprüngen 38, 40, 42 hintergriffen. Mit anderen Worten wird durch den Bajonettverschluss, der durch die genannten Vorsprünge 22, 24, 26, 38, 40, 42 ausgebildet wird, die Bewegungsmöglichkeit des Halteelements 14 in Richtung des Rohrendes 50 des ersten Rohrendabschnitts 12 begrenzt. Der Bajonettverschluss verhindert somit eine Bewegung des Halteelements 14 in Richtung eines Pfeils 52. Der Bajonettverschluss kann weiterhin so ausgebildet sein, dass er auch eine Bewegung entgegen der Richtung des Pfeils 52 verhindert.

Fig. 5 zeigt die Verbindungseinrichtung 10, wobei der zweite Rohrendabschnitt 13 abschnittsweise auf den ersten Rohrendabschnitt 12 geschoben ist. Das Aufschieben erfolgte dabei gegen die Richtung des Pfeils 52 (siehe Fig. 4). Aus Fig. 5 wird ersichtlich, dass die Lasche 46 eine Durchgangsausnehmung 54 aufweist. Die Durchgangsausnehmung 54 ist in dem von dem Befestigungsabschnitt 44 abgewandten Endbereich der Lasche 46 ausgebildet. Die Durchgangsausnehmung 54 fluchtet mit einer Ausnehmung 56 des zweiten Rohrendabschnitts 13. Eine Schraube 58 kann teilweise durch die Durchgangsausnehmung 54 geführt und teilweise in die Ausnehmung 56 eingedreht, d.h. eingeschraubt, werden, um den ersten Rohrendabschnitt 12 am zweiten Rohrendabschnitt 13 zu fixieren.

Die Durchgangsausnehmung 54 ist in Form eines Langlochs ausgebildet, um ein Spiel des ersten Rohrendabschnitts 12 entlang dessen Längsachse 28 (siehe Fig. 4) relativ zu dem zweiten Rohrendabschnitt 13 zu ermöglichen. Im vorliegenden Fall ist die Durchgangsausnehmung 54 so ausgebildet, dass sich der zweite Rohrendabschnitt 13 auf den ersten Rohrendabschnitt 12 zubewegen, aber nicht von dem ersten Rohrendabschnitt 12 wegbewegen kann.

Die Lasche 46 weist einen Führungsabschnitt 60 zur Anlage an dem zweiten Rohrendabschnitt 13 auf. Der Führungsabschnitt 60 verläuft im Wesentlichen parallel zu der Längsachse 28 (siehe Fig. 4) des ersten Rohrendabschnitts 12. Durch den Führungsabschnitt 60 kann die korrekte Lage der Lasche 46 beim Montieren der Verbindungseinrichtung 10 leicht gefunden werden.

Zusammenfassend betrifft die Erfindung eine Verbindungseinrichtung zur fluidisch dichten Verbindung zweier Rohrendabschnitte. Die Verbindungseinrichtung weist ein Halteelelement auf, das durch einen Bajonettverschluss an einem ersten Rohrendabschnitt montierbar ist. Das Halteelement weist eine Lasche auf, die mittels einer Schraube der Verbindungseinrichtung an einem zweiten Rohrendabschnitt befestigbar ist. Die Verbindungseinrichtung ist dadurch konstruktiv besonders einfach ausgebildet, schafft eine dichte Verbindung und kann auch bei beengten Verhältnissen montiert werden.

## Patentansprüche

1. Verbindungseinrichtung (10) für die fluidische Verbindung eines Fluidrohrabschnitts (16) mit einem weiteren Fluidrohrabschnitt (18) umfassend
einen ersten Rohrendabschnitt (12) und einen zweiten Rohrendabschnitt (13), wobei an dem ersten Rohrendabschnitt (12) ein Halteelement (14) der Verbindungseinrichtung (10) angeordnet ist, das zumindest begrenzt um die Längsachse (28) des ersten Rohrendabschnitts (12) drehbar ist,
wobei das Halteelement (14) und der erste Rohrendabschnitt (12) mehrere Vorsprünge (22, 24, 26, 38, 40, 42) aufweisen, die einen Bajonettverschluss zwischen dem ersten Rohrendabschnitt (12) und dem Halteelement (14) bilden,
wobei das Halteelement (14) eine Lasche (46) mit einer Durchgangsausnehmung (54) aufweist, in der eine Schraube (58) des Halteelements (14) geführt ist und wobei das zweite Rohrelement (13) eine Ausnehmung (56) aufweist, in die die Schraube (58) eindrehbar ist.

2. Verbindungseinrichtung nach Anspruch 1, wobei der erste Rohrendabschnitt (12) zumindest einen Anschlag aufweist, der die Drehung des Halteelements (14) um den ersten Rohrendabschnitt (12) begrenzt.

3. Verbindungseinrichtung nach Anspruch 1 oder 2, wobei das Halteelement (14) einen Befestigungsabschnitt (44) zur Lagerung des Halteelements (14) an dem ersten Rohrendabschnitt (12) aufweist, der mehr als die Hälfte des Umfangs (30) des ersten Rohrendabschnitts (12) umfasst.

4. Verbindungseinrichtung nach einem der vorhergehenden Ansprüche, wobei der Befestigungsabschnitt (44) im Wesentlichen ringförmig ausgebildet ist und den Umfang (30) des ersten Rohrendabschnitts (12) vollständig umfasst.

5. Verbindungseinrichtung nach einem der vorhergehenden Ansprüche, wobei die Lasche (46) aus Blech ausgebildet ist.

6. Verbindungseinrichtung nach einem der vorhergehenden Ansprüche, wobei die Lasche (46) einteilig mit dem Befestigungsabschnitt (44) des Halteelements (14) ausgebildet ist.

7. Verbindungseinrichtung nach einem der vorhergehenden Ansprüche, wobei zwischen dem ersten Rohrendabschnitt (12) und dem zweiten Rohrendabschnitt (13) ein elastisches Dichtungselement (48) angeordnet oder ausgebildet ist.

8. Verbindungseinrichtung nach einem nach einem der Ansprüche 1 bis 7 für eine fluidische Verbindung eines Turboladers (16) mit einem Ladeluftrohr (18)

9. Verbindungseinrichtung nach Anspruch 8, wobei der erste Rohrendabschnitt (12) ein Rohrendabschnitt des Turboladers (16) und der zweite Rohrendabschnitt (13) ein Rohrendabschnitt des Ladeluftrohrs (18) ist.

10. Verbindungseinrichtung nach Anspruch 8, wobei der erste Rohrendabschnitt (12) ein Rohrendabschnitt des Ladeluftrohrs (18) und der zweite Rohrendabschnitt (13) ein Rohrendabschnitt des Turboladers (16) ist.

11. Ladeluftrohr mit einem Rohrendabschnitt (12, 13) einer Verbindungseinrichtung nach einem der Ansprüche 1 bis 7.
